(19) Europäisches Patentamt
European Patent Office
Office européen des brevets

(11) **EP 4 078 113 B1**

## (12) EUROPEAN PATENT SPECIFICATION

(45) Date of publication and mention
of the grant of the patent:
**06.11.2024 Bulletin 2024/45**

(21) Application number: **21750674.0**

(22) Date of filing: **05.02.2021**

(51) International Patent Classification (IPC):
**G01H 1/14** *(2006.01)*      **G01H 1/16** *(2006.01)*
**G01M 7/02** *(2006.01)*

(52) Cooperative Patent Classification (CPC):
**G01H 1/14; G01H 1/16; G01M 7/025**

(86) International application number:
**PCT/TR2021/050102**

(87) International publication number:
**WO 2021/158198 (12.08.2021 Gazette 2021/32)**

(54) **A NOVEL EXPERIMENTAL MODAL ANALYSIS METHOD BASED ON RESPONSE CONTROL APPROACH FOR NONLINEAR ENGINEERING STRUCTURES**

NEUARTIGES EXPERIMENTELLES MODALES ANALYSEVERFAHREN BASIEREND AUF EINEM REAKTIONSSTEUERANSATZ FÜR NICHTLINEARE INGENIEURBAUTEN

NOUVEAU PROCÉDÉ D'ANALYSE MODALE EXPÉRIMENTALE BASÉ SUR UNE APPROCHE DE COMMANDE DE RÉPONSE DE STRUCTURES D'INGÉNIERIE NON LINÉAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2020 TR 202001866**
**24.07.2020 TR 202011808**

(43) Date of publication of application:
**26.10.2022 Bulletin 2022/43**

(73) Proprietors:
• **ORTA DOGU TEKNIK UNIVERSITESI**
06680 Çankaya/Ankara (TR)
• **TÜBITAK TÜRKIYE BILIMSEL VE TEKNOLOGIK ARASTIRMA**
**KURUMU**
06680 Çankaya/Ankara (TR)

(72) Inventors:
• **ÖZGÜVEN, Hasan Nevzat**
06800 Çankaya/Ankara (TR)
• **KARAAGAÇLI, Taylan**
06105 Ankara (TR)

(74) Representative: **Yalçiner Patent and Consulting Ltd.**
**Tunus Caddesi 85/3-4**
**Kavaklidere**
**06680 Ankara (TR)**

(56) References cited:
**CN-A- 101 718 613    CN-A- 105 043 700**
**CN-A- 105 631 090**

• **LINK M ET AL: "NON-LINEAR EXPERIMENTAL MODAL ANALYSIS AND APPLICATION TO SATELLITE VIBRATION TEST DATA", COMPDYN 2011 III ECCOMAS THEMATIC CONFERENCE ON COMPUTATIONAL METHODS IN STRUCTURAL DYNAMICS AND EARTHQUAKE ENGINEERING, 28 May 2011 (2011-05-28), pages 1 - 24, XP093006974, Retrieved from the Internet <URL:http://congress.cimne.com/eccomas/proceedings/compdyn2011/compdyn2011_full/669.pdf> [retrieved on 20221212]**

- **ARSLAN ÖZGE ET AL: "Parametric identification of structural nonlinearities from measured frequency response data", MECHANICAL SYSTEMS AND SIGNAL PROCESSING, vol. 25, no. 4, 31 May 2011 (2011-05-31), AMSTERDAM, NL, pages 1112 - 1125, XP093007257, ISSN: 0888-3270, Retrieved from the Internet <URL:https://www.sciencedirect.com/science/article/pii/S0888327010003298/pdfft?md5=84d50c062b286c3e963924b1b7d68ae8&pid=1-s2.0-S0888327010003298-main.pdf> [retrieved on 20221212], DOI: 10.1016/j.ymssp.2010.10.010**
- **ZHANG GENBEI ET AL: "Identification and verification of structural nonlinearities based on vibration tests", ISMA 2012, INTERNATIONAL CONFERENCE ON NOISE AND VIBRATION ENGINEERING, 30 September 2012 (2012-09-30), pages 2611 - 2623, XP093007495, Retrieved from the Internet <URL:https://www.researchgate.net/profile/C-Zang/publication/297409372_Identification_and_verification_of_structural_nonlinearities_based_on_vibration_tests/links/56dee5ec08aec8c022cf2ffb/Identification-and-verification-of-structural-nonlinearities-based-on-vibration-tests.pdf> [retrieved on 20221212]**

**Description**

**TECHNICAL FIELD RELATED TO INVENTION**

The invention is related to the field and methodologies of "nonlinear system identification in structural dynamics". In other words, it is related to the field and methodologies of constructing a mathematical model describing the vibration behavior of a nonlinear system using experimental data. Moreover, the invention can also be used for systems in which nonlinear properties can be neglected.

**THE STATE OF ART RELATED TO THE INVENTION (PRIOR ART)**

In [1,2], which is in prior art, many methodologies in the field of identifying nonlinear systems in structural dynamics are mentioned. According to the current knowledge, the construction of a mathematical model describing the vibration behavior involves technical difficulties for engineering structures that contain a large number of nonlinear mechanical connections and/or exhibit geometrically nonlinear behavior due to large deformations. The most suitable methodologies to obtain mathematical models of these structures use the concept of "nonlinear normal mode" (NNM).

The concept of NNM is defined in [3,4] in the prior art.

In [5], which is in the prior art, "Single Nonlinear Mode Method" (SNMM) has been proposed based on the concept of NNM. This method shows that the frequency responses of a nonlinear system at the energy level of interest, near resonance, can be calculated from a single NNM and its corresponding natural frequency. According to this method, the NNM of interest and the corresponding natural frequency can be written as a function of a single parameter - the modal amplitude. This method can be applied if the modes of the system are far enough from each other and the interaction between NNMs in the energy range of interest is negligible.

In [6], which is in the prior art, a method has been proposed that determines the NNM of interest of the real system and the corresponding natural frequency by minimizing the error between the frequency responses measured from the force-controlled sine sweep test and the frequency responses calculated analytically with the SNMM. The technical difficulty caused by this method is that NNM and its corresponding natural frequency cannot be measured directly and it is calculated indirectly using the measured frequency responses. For this reason, the method suggested in [6] brings along serious computational burden. The computational burden increases in proportion to the complexity of the engineering structure. In addition, since the conventional constant force sine sweep test is applied in this method, the unstable regions of the frequency response curves of strongly nonlinear systems cannot be detected due to the jump, and the resonance points cannot be measured accurately. This method has been validated with a real cantilever beam attached at its free end to a metal wire creating a cubic stiffness effect. According to the current knowledge, there is no real engineering structure to which the method is applied. The NNM and natural frequency obtained by this method can be used to calculate the frequency response of the system with the SNMM for harmonic loading conditions that have not been tested.

In [7], which is in the prior art, similar to [6], another method has been proposed that calculates the NNM of the system and the corresponding natural frequency by minimizing the error between the measured frequency responses and the ones calculated analytically. Also, this method brings along serious computational burden. Also, in this method, since the conventional constant force sine sweep test is applied, the unstable regions of the frequency response curves of strongly nonlinear systems cannot be detected due to the jump, and the resonance points cannot be measured accurately. The method has been validated by the benchmark experimental setup [8], consisting of a real nonlinear cantilever beam. According to the current knowledge, there is no real engineering structure to which the method is applied.

In [9], which is in the prior art, a method named "identification of nonlinear systems with time series based linearity plots" is proposed. This method consists of adapting the restoring force surface method [10] to the modal space. The test approach used in this method is the phase-resonance approach that allows the system to vibrate harmonically in only one mode of interest. With the phase-resonance test, the modal restoring force can be measured. The nonlinear modal stiffness and modal damping coefficients of the system can be determined by fitting a curve to the measured modal restoring force. The application of the method has been demonstrated on a real space system [9]. The technical problem of this method is that it cannot be applied to systems with strong nonlinear effects. Strong nonlinear effects are the effects that cause the system at the same frequency to vibrate at different amplitudes depending on initial conditions. In this case, the frequency response curve of the system folds on itself and causes the jump phenomenon in standard force-controlled sine sweep tests. In addition, this method brings along experimental difficulties due to phase-resonance testing as well as computational difficulties.

In [11], which is in the prior art, similar to [9], a method named "nonlinear resonance decay method" based on the restoring force surface method is proposed. This method, different from the method suggested in [9] - with the help of the burst sine excitation strategy applied at the resonance frequency of the NNM of interest - can take into account the interaction between NNMs. The method has been applied to a wing-like structure containing hardening stiffness at the pylon connections [12] and a real transport aircraft [13]. This method also brings along experimental difficulties due to phase-resonance testing as well as computational difficulties.

In [14], which is in the prior art, a method that generalizes the "phase lag quadrature test" approach to nonlinear systems was proposed. In this method, the system is enabled to vibrate in a single NNM (resonance) of interest. The free vibration data of the system is measured by suddenly stopping the excitation force signal applied to the system, which vibrates in the NNM of interest. By applying time-frequency analysis to the measured free decay vibration data, the change of the NNM of interest and the corresponding natural frequency in regard to the energy level of the system can be determined. This proposed method has been verified by numerical examples [14] and a real beam structure [15]. The technical problem of this method is that the phase lag between the vibration response of the system and the excitation force must be manually adjusted.

The manually adjusted phase lag in [14] has been automated with the control method named "Phase-Locked-Loop" (PLL) in [16], which is in the prior art. Thus, the NNM backbone curves of the nonlinear system can be measured automatically. In other words, the change of NNM of interest and the corresponding natural frequency with respect to the vibration (energy) level can be measured during the experiment. This method can be applied to systems with strong nonlinear stiffness. The PLL control method was verified on a reference beam [16] and on a circular plate, Chinese gong, and a piezoelectric cantilever beam [17]. In addition, in [18], which is in the prior art, the frequency responses of a nonlinear cantilever beam near resonance could be synthesized via a single NNM and the corresponding natural frequency measured with the PLL control technique by using SNMM. In [18], it has also been shown that the unstable points on the constant-force frequency response curve of the system can be measured with the PLL control method. The technical problems of the PLL control method are that the measured NNMs are not normalized to the mass matrix of the system and the nonlinear modal damping ratio of the system cannot be measured directly. As stated in [18], these technical problems must be solved in order to calculate the frequency response of the system in untested harmonic forcing conditions accurately. In [18], these technical problems are tried to be overcome by intricate methods that may make it difficult to obtain accurate results, especially in real and complex engineering structures. A difficult method trying to obtain the mass matrix experimentally to normalize the NNM of interest is proposed. This method requires extra modal testing at low vibration levels and measuring the linear modes of the system. Apart from the extra test load caused by this method, nonlinear friction forces in mechanical connections, which are frequently encountered in engineering structures, become more dominant at low vibration levels and can prevent accurate measurement of linear modes. Therefore, the modal matrix created by combining the measured linear modes and used to calculate the mass matrix of the system may contain serious experimental errors. In addition, since the number of degrees of freedom measured is generally much more than the number of modes, the number of rows and columns of the modal matrix will not be equal. However, in order to calculate the mass matrix, the modal matrix must be inverted. Inversion of a matrix that contains experimental errors may cause large computational errors, and the necessity to use generalized inversion due to the fact that this matrix is not square will cause further increase in computational error. Another technical problem of the PLL control method, which is the determination of nonlinear modal damping ratio, is tried to be solved by an intricate method that is based on excitation power considerations [16, 18, 19] and may cause errors similar to experimental errors encountered while trying to normalize NNMs with respect to the mass matrix. In addition to all these, the PLL method is not yet commercialized. The software and hardware architecture required by this method is very different from existing commercial software and hardware. Therefore, it requires serious prototype studies in terms of software and hardware architecture in order to be commercialized.

In the prior art, another control method that can automatically measure the NNM backbone curves of the nonlinear system has been proposed in [20]. This control method is called "Control Based Continuation" (CBC). This method has been validated with a real single degree of freedom oscillator [20]. This method also shares similar advantages and technical problems with the PLL method. The method is not yet commercialized and requires serious prototype studies in terms of software and hardware architecture in order to be commercialized.

In [23], a method is proposed based on a qualification test procedure of spacecraft structures where dynamic response is controlled at specified levels by input notching in order to avoid the overloading of the structure under test. In this method, the responses of weakly nonlinear satellite structures to not measured input levels are predicted by applying interpolation and extrapolation techniques to the modal data extracted by conventional modal analysis from the transmissibilities measured at three different input levels during the qualification tests.

In [24], a method that achieves the parametric identification of nonlinear stiffness and damping of weakly nonlinear structures in spatial domain by using constant-response FRFs reconstructed from force versus response curves measured at different constant frequencies is proposed. This method requires a prior knowledge of the type of nonlinearity and is restricted to weakly nonlinear structures.

The major drawback of current commercial modal test systems is that they cannot identify strongly nonlinear engineering structures.

## SUMMARY AND AIMS OF THE INVENTION

The present invention is related to the field and methodologies of "nonlinear system identification in structural dynamics" in order to eliminate the above-mentioned disadvantages and provide new advantages to the relevant technical field.

The technical problem solved by the invention is that nonlinear complex engineering structures can also be identified using conventional linear modal analysis approach and existing hardware. In other words, the technical problem solved is the derivation of reliable mathematical models of engineering structures that contain a large number of nonlinear mechanical connections and/or geometrically nonlinear engineering structures due to large deformations by using experimental measurements.

The aim of the present invention is to use the current commercial data acquisition/control equipment widely used in modal testing/analysis and standard modal analysis methods used for linear systems, to measure the mass normalized NNM (nonlinear normal mode) of interest, the corresponding natural frequency and the modal damping ratio, to calculate the constant-force frequency responses of the system - together with the unstable regions, if any - in untested harmonic forcing conditions using these measured parameters in the SNMM (single nonlinear mode method), and also, independently of this calculation, to provide a direct measurement of the constant-force frequency response of the system.

In order to achieve these, it has been shown that the "Response Controlled Stepped Sine Test" (RCT) approach can be used and the "Harmonic Force Surface" (HFS) method has been developed.

The problem is solved by the experimental modal analysis method for engineering systems according to the claim 1.

### Definitions of Figures Explaining the Invention

The figures used to better explain the analysis method developed with this invention are as follows.

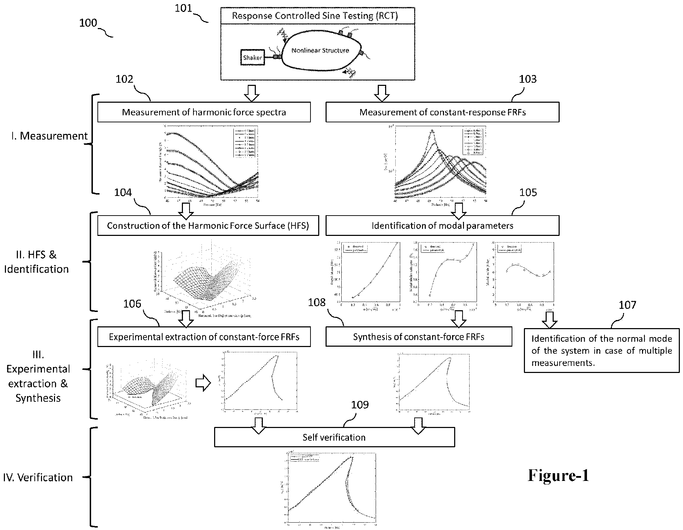

Figure 1 Response Controlled Stepped Sine Test (RCT) Flow Chart
Figure 2 Harmonic Force Spectra
Figure 3 Constant Response FRFs
Figure 4 Harmonic Force Surface
Figure 5 Identification of Modal Parameters
Figure 6 Experimental Detection of Constant Force FRFs
Figure 7 Synthesis of Constant Force FRFs
Figure 8 Verification Graph View
Figure 9 T-Beam Application View of the Invention
Figure 10 Application of the Invention on a Missile
Figure 11 (a) Constant-Force FRFs of the Missile Measured with the Conventional Force Control Approach (b) Constant-Response FRFs of the Missile Measured with the RCT Approach
Figure 12 Identification of Missile Modal Parameters
Figure 13 Detection of Missile Normal Mode
Figure 14 Comparison of the Constant Force FRFs of the Missile Measured with the Conventional Force Control Approach with the Constant Force FRFs Synthesized by Using Modal Parameters Experimentally Determined by the RCT Method

### Definitions of Elements and Parts Forming the Invention

The components of the missile and the T-beam test setups, that are used for the experimental verification of the modal analysis method based on the response control approach for the engineering structures developed with this invention, are individually numbered and given below.

201 Metal Strip

202 Cantilever Beam

203 Modal Shaker

204 Stringer

205 Dynamic Force Transducer

206 Accelerometer

301 Bolt Connection

302 Flexible Rope

303 Missile Nose

304 Missile's Center Section

305 Missile's Tail Section

## DETAILED DESCRIPTION OF THE INVENTION

In this detailed description, the innovation of the invention is explained with examples that will not have any limiting effect on the claims of the patent, in order to better understand the subject matter.

Commercial modal test hardware and software enable the determination of the dynamic properties of many engineering structures in many sectors, especially in the aviation, space and automotive sectors, and create reliable mathematical models that can be used in design.

The present invention is capable of identifying nonlinear systems as well as linear systems that are simpler and that many commercial software/hardware can currently implement. In other words, this invention, which was developed primarily for the purpose of identifying nonlinear systems, can be used to directly identify linear systems. Basically all real structures exhibit more or less nonlinear dynamic behavior. 'Linear structure' expression is used to refer to structures in which nonlinear properties can be neglected. Since there are many commercial software and hardware with the ability to identify systems in which nonlinearity can be neglected, the application of the invention to linear systems does not have importance, but it is particularly emphasized that the invention can also be applied to linear systems in order to avoid abuses related to the scope of the invention.

All the steps listed below can be used to identify nonlinear systems, as well as linear systems. When the invention is applied to linear systems, the modal parameters will be constant with respect to the modal amplitude. In nonlinear systems, the modal parameters will change with changing modal amplitude.

## 1. The Theory of the Invention

### 1.1. The Concept of Nonlinearity Matrix

The equation of motion of a nonlinear system with n degrees of freedom and structural damping can be written as follows:

$$[M]\{\ddot{x}\} + i[H]\{\dot{x}\} + [K]\{x\} + \{f_N(x,\dot{x})\} = \{f\} \qquad (1)$$

In this equation, **[M], [H]** and **[K]** represent the mass, structural damping and stiffness matrices of the underlying linear system, respectively. **{x}** represents the displacement vector of the system, dot represents the derivative with respect to time, and **i** represents the unit imaginary number. **{ $f_N(x, \dot{x})$ }** and **{f},** define the nonlinear internal force and harmonic external excitation force vectors, respectively.

If the system is subjected to a harmonic excitation force acting at frequency ω, when all other harmonic terms are omitted, equation (1) can be converted to a complex nonlinear algebraic set of equations as follows:

$$-\omega^2[M]\{X\} + i[H]\{X\} + [K]\{X\} + \{F_N\} = \{F\} \qquad (2)$$

In this equation, **{X}, {$F_N$}** and **{F},** denote the complex displacement amplitude vector, the complex nonlinear internal force amplitude vector and the complex external excitation force amplitude vector of the system, respectively.

According to the Describing Function Method (DFM) [21], the complex internal force vector can be expressed as:

$$\{F_N\} = [\Delta]\{X\} \qquad (3)$$

In this equation $[\Delta]$ shows the response level dependent nonlinearity matrix of the system. The real and imaginary parts of this complex matrix correspond respectively to nonlinear stiffness and nonlinear damping matrices depending on the displacement amplitude of the system.

When equation (3) is placed in equation (2), the equation of motion can be written as:

$$(-\omega^2[M] + i[H] + [K] + [\Delta])\{X\} = \{F\} \qquad (4)$$

1.2. Nonlinear Eigenvalue Problem

According to SNMM [5-7], NNMs are found by solving the nonlinear eigenvalue problem given below related to the conservative part of equation (4).

$$([K] + [\Delta]_{re})\{\overline{\psi}(q_r)\}_r = \overline{\omega}_r^2(q_r)[M]\{\overline{\psi}(q_r)\}_r \qquad (5)$$

Here, $q_r$ refers to the $r$'th modal amplitude, $\{\overline{\psi}(q_r)\}_r$ and $\overline{\omega}_r(q_r)$ refer to the r'th nonlinear normal mode and its corresponding natural frequency, which are functions of the modal amplitude. $[\Delta]_{re}$ represents the real part of the nonlinearity matrix, in other words the nonlinear stiffness matrix. It should be noted that $[\Delta]_{re}$ depends on the displacement response of the system, in other words on the product of $q_r\{\overline{\psi}(q_r)\}_r$. It is as follows:

$$[\Delta]_{re} = [\Delta\,(q_r\{\overline{\psi}(q_r)\}_r)]_{re} \qquad (6)$$

As a result, equation (5) expresses a nonlinear eigenvalue problem that requires an iterative solution. Starting from the normal modes of the underlying linear system, equation (5) can be solved for $\{\overline{\psi}(q_r)\}_r$ and $\overline{\omega}_r(q_r)$ using various iterative solution techniques (For example: Newton-Raphson Method [6]).

1.3. Single Nonlinear Mode Method (SNMM)

If the modes are sufficiently separate from each other and the interaction between the modes in the frequency range of interest is at negligible level, the frequency responses around the resonance of the r'th mode of the system expressed by equation (4) can be calculated using a single NNM calculated from equation (5) as follows [5-7]:

$$\{X\} = q_r\{\overline{\psi}(q_r)\}_r \qquad (7)$$

When equation (7) is placed into equation (4) and the whole equation is multiplied by $\{\overline{\psi}(q_r)\}_r^T$ from the left, the following equation is obtained:

$$(-\omega^2\overline{m}_r(q_r) + \overline{k}_r(q_r) + i\overline{h}_r(q_r))q_r = \{\overline{\psi}(q_r)\}_r^T\{F\} \qquad (8)$$

Here, $\overline{m}_r(q_r)$, $\overline{k}_r(q_r)$ and $\overline{h}_r(q_r)$ represent modal mass, modal stiffness and modal hysteretic damping, respectively, where

$$\overline{m}_r(q_r) = \{\overline{\psi}(q_r)\}_r^T[M]\{\overline{\psi}(q_r)\}_r, \qquad \overline{k}_r(q_r) = \{\overline{\psi}(q_r)\}_r^T([K] + [\Delta]_{re})\{\overline{\psi}(q_r)\}_r,$$

$$\overline{h}_r(q_r) = \{\overline{\psi}(q_r)\}_r^T([H] + [\Delta]_{im})\{\overline{\psi}(q_r)\}_r \qquad (9)$$

$[\Delta]_{im}$ represents the imaginary part of the nonlinearity matrix, in other words the displacement level dependent nonlinear damping matrix.

Equation (8) can alternatively be written as:

$$\bar{m}_r(q_r)(-\omega^2 + \bar{\omega}_r^2(q_r) + i\bar{\eta}_r(q_r)\bar{\omega}_r^2(q_r))q_r = \{\bar{\psi}(q_r)\}_r^T\{F\} \qquad (10)$$

In this equation, $\bar{\omega}_r(q_r)$ is the natural frequency corresponding to the r'th mode of the system, and $\bar{\eta}_r(q_r)$ is the modal hysteretic damping ratio corresponding to the r'th mode, where

$$\bar{\omega}_r^2(q_r) = \bar{k}_r(q_r)/\bar{m}_r(q_r), \qquad \bar{\eta}_r(q_r) = \bar{h}_r(q_r)/(\bar{m}_r(q_r)\bar{\omega}_r^2(q_r)) \qquad (11)$$

Modal amplitude $q_r$ can be solved from equation (10) as follows:

$$q_r = \frac{\{\bar{\psi}(q_r)\}_r^T\{F\}}{\bar{m}_r(q_r)\left(\bar{\omega}_r^2(q_r) - \omega^2 + i\bar{\eta}_r(q_r)\bar{\omega}_r^2(q_r)\right)}$$

$$(12)$$

When equation (12) is placed into equation (7), the frequency response of the system can be obtained as follows:

$$\{X\} = \frac{\{\bar{\psi}(q_r)\}_r\{\bar{\psi}(q_r)\}_r^T\{F\}}{\bar{m}_r(q_r)\left(\bar{\omega}_r^2(q_r) - \omega^2 + i\bar{\eta}_r(q_r)\bar{\omega}_r^2(q_r)\right)}$$

$$(13)$$

In this equation, NNM can be normalized with respect to modal mass as follows:

$$\{\bar{\phi}(q_r)\}_r = \{\bar{\psi}(q_r)\}_r/\sqrt{\bar{m}_r(q_r)} \qquad (14)$$

When equation (14) is placed in equation (13), the following equation can be obtained:

$$\{X\} = \frac{\{\bar{\phi}(q_r)\}_r\{\bar{\phi}(q_r)\}_r^T\{F\}}{\bar{\omega}_r^2(q_r) - \omega^2 + i\bar{\eta}_r(q_r)\bar{\omega}_r^2(q_r)}$$

$$(15)$$

For an excitation force applied to the system at k'th degree of freedom, the frequency response function (FRF) of $j$'th degree of freedom near resonance can be obtained from equation (15) as follows:

$$\bar{\alpha}_{jk}(\omega, q_r) = \frac{\bar{\phi}_{jr}(q_r)\bar{\phi}_{kr}(q_r)}{\bar{\omega}_r^2(q_r) - \omega^2 + i\bar{\eta}_r(q_r)\bar{\omega}_r^2(q_r)}$$

$$(16)$$

The nonlinear hysteretic modal damping model in equation (16) can be replaced with an equivalent viscous modal damping model. Accordingly, equation (16) can alternatively be written as:

$$\overline{\alpha}_{jk}(\omega, q_r) = \frac{\overline{\phi}_{jr}(q_r)\overline{\phi}_{kr}(q_r)}{\overline{\omega}_r^2(q_r) - \omega^2 + i2\overline{\xi}_r(q_r)\omega\overline{\omega}_r(q_r)}$$

$$(17)$$

Here, $\overline{\xi}_r(q_r)$ is the nonlinear viscous modal damping ratio.

This invention consists of the experimental methodology developed to determine the nonlinear modal parameters given in equations (16) - (17) by experimental measurements, to calculate the frequency responses of the system in untested constant-amplitude excitation scenarios near the resonance by using these modal parameters or to obtain these frequency responses directly from the experiment. This methodology forming the invention is described in detail below.

## 2. The Methodology of the Invention

### 2.1. Measurement of Constant-Response Frequency Response Functions (FRF) in Linear Form

The modal parameters given in Equations (16)-(17) are the function of a single parameter - modal amplitude. In this invention, it is suggested to measure the constant-response FRFs by keeping the modal amplitude of the nonlinear system constant with the "Response Controlled stepped sine Test" (RCT) strategy. If the modal amplitude is kept constant, measured FRFs come out in quasi-linear form according to SNMM. Therefore, by applying standard linear modal analysis methods used in commercial software to these measured constant-response FRFs, nonlinear modal parameters can be easily obtained for each modal amplitude. This invention essentially extends the method in [22], which is in the prior art, to complex engineering structures containing a large number of nonlinear elements distributed at different points thereon. The method in [22] is valid when there is a nonlinear element(s) connected to a single point in the structure and this element(s) is only between a single degree of freedom and ground. Moreover, in the method in [22], it is necessary to excite the structure from the degree of freedom to which the nonlinear element is connected and to keep the response of this point constant. The invention forming the subject matter of this patent can be applied to structures containing a large number of nonlinear elements distributed in different points. In this case, the system can be excited from any point and it is sufficient to keep the response of any point constant. Keeping the response of any point constant is also equivalent to keeping the *modal amplitude* of the structure constant.

### 2.2. Excitation Strategy

In the experimental methodology of this invention, the system could be excited from a single point or from multiple excitation points. It is practically easy to excite the system from a single point. When the system is excited from a single point, keeping the modal amplitude of the system constant is equivalent to keeping the displacement amplitude of the excitation point constant. On the other hand, in large structures, it may be necessary to vibrate the system from more than one point in order to vibrate all points well enough. In this case, the amplitudes of the excitation forces at different excitation points must be adjusted according to the mode shape in order to excite only the mode of interest at a constant modal amplitude. In order to perform this adjustment correctly, the mode shape of interest can be derived by applying a preliminary single point excitation test.

### 2.3. Response-Control Strategy

The displacement amplitude of the excitation point can be kept constant, directly or indirectly, depending on the type of sensor used during RCT. In the case of accelerometers, that are commonly used in experimental modal analysis, the displacement amplitude can be kept constant indirectly by feeding the closed loop controller with the acceleration profile required to keep the displacement amplitude of the excitation point constant throughout the frequency sweep.

### 2.4. Determination of Nonlinear Modal Parameters and Experimental Derivation of Mass Normalized NNMs

It is important to be able to calculate the frequency responses of the system near resonance for various untested harmonic excitation scenarios, to meet critical design criteria and to understand the complex dynamic behavior of engineering structures. If the nonlinear modal parameters used in equations (16) and (17) can be determined experimentally, these modal parameters can be used to synthesize the frequency response of the system for various constant-amplitude harmonic force scenarios. These parameters, which are constant for each mode for linear systems, can be found as a function of the vibration displacement amplitude of any point for nonlinear systems.

In this invention, the constant-response FRFs of the system are measured using the RCT strategy at different displacement amplitude levels to determine nonlinear modal parameters. Then, at each displacement amplitude level the following analytical model is fitted -to the measured constant-response FRFs with linear modal analysis and the modal parameters are determined.

$$\overline{\alpha}_{jk}(\omega, q_r) = \frac{\overline{A}_{jkr}(q_r)}{\overline{\omega}_r^2(q_r) - \omega^2 + i\overline{\eta}_r(q_r)\overline{\omega}_r^2(q_r)}$$

$$(18)$$

Here $\overline{A}_{jkr}(q_r)$ refers to the complex modal constant. The nonlinear hysteretic modal damping model used in Equation (18) can be replaced with an equivalent viscous modal damping model as given below.

$$\overline{\alpha}_{jk}(\omega, q_r) = \frac{\overline{A}_{jkr}(q_r)}{\overline{\omega}_r^2(q_r) - \omega^2 + i2\overline{\xi}_r(q_r)\omega\overline{\omega}_r(q_r)}$$

$$(19)$$

After obtaining $A_{jkr}(q_r)$ $\overline{\omega}_r(q_r)$ and $\overline{\xi}_r(q_r)$ (or $\overline{\eta}_r(q_r)$) experimentally, they can be plotted as functions of modal amplitude.

As mentioned in the prior art, one of the most important features that distinguish this invention from other methods in the prior art is that the nonlinear modal damping ratio can be determined practically.

In this invention, apart from determining the modal parameters experimentally, mass normalized NNMs can also be determined experimentally as described below.

Firstly, experimentally determined modal constants can be combined into a vector as seen below:

$$\{\overline{A}(q_r)\}_r^T = \{\overline{A}_{11r}(q_r) \quad \overline{A}_{21r}(q_r) \quad \cdots \quad \overline{A}_{m1r}(q_r)\}^T$$

$$(20)$$

Here *m* refers to the total number of measurement points.

When equations (18)-(19) are compared with equations (16)-(17), it can be seen that the experimentally obtained modal constants are associated with mass normalized NNMs via the following equation.

$$\overline{A}_{jkr}(q_r) = \overline{\phi}_{jr}(q_r)\overline{\phi}_{kr}(q_r)$$

$$(21)$$

When equation (21) is substituted into equation (20), the following equation is obtained:

$$\{\overline{A}(q_r)\}_r = \{\overline{\phi}_{1r}(q_r)\overline{\phi}_{1r}(q_r) \quad \overline{\phi}_{1r}(q_r)\overline{\phi}_{2r}(q_r) \quad \cdots \quad \overline{\phi}_{1r}(q_r)\overline{\phi}_{mr}(q_r)\}^T$$

$$(22)$$

As can be easily seen, $\overline{\phi}_{1r}(q_r)$ is the common multiplier of all the elements of the vector given in equation (22). This multiplier can be calculated by taking the square root of the modal constant of the excitation point:

$$\overline{\phi}_{1r}(q_r) = \sqrt{\overline{A}_{11r}(q_r)}$$

$$(23)$$

Finally, when equation (22) is divided by the square root term in equation (23), the NNM of interest can be determined in mass normalized form as follows:

$$\{\overline{\phi}(q_r)\}_r = \frac{1}{\sqrt{\overline{A}_{11r}(q_r)}}\{\overline{A}(q_r)\}_r$$

$$(24)$$

As mentioned while reviewing the prior art, another important feature that distinguishes this invention from other methods in the prior art is that NNMs can be obtained practically in mass normalized form.

2.5. Synthesis of Frequency Responses for Untested Constant Harmonic Force Scenarios

By using the experimentally determined nonlinear modal parameters in the following equation, the frequency responses of the system near resonance can be synthesized for untested constant-amplitude harmonic force scenarios:

$$X_j(q_r) = \frac{\overline{A}_{jkr}(q_r)F_k}{\overline{\omega}_r^2(q_r) - \omega^2 + i2\overline{\xi}_r(q_r)\omega\overline{\omega}_r(q_r)}$$

$$(25)$$

Here, $X_j(q_r)$ is the displacement amplitude in point $j$, and $F_k$ is the amplitude of the harmonic excitation force applied to point $k$.

Equation (25) can be solved by iterative solution techniques such as Newton's Method. Methods such as the arc-length continuation method can be used to calculate unstable regions in frequency response curves.

2.6. Harmonic Force Surface (HFS) Method

The frequency response of the system, which can be calculated by Equation (25), can be experimentally obtained by the HFS method, which is part of the present invention. By using the harmonic force spectra measured during RCT, the HFS method is able to detect the frequency responses of the system - together with unstable points, if any - for constant-amplitude harmonic force scenarios without the need for extra experimentation.

The process of determining the frequency response curves of the system by using RCT and HFS consists of the following steps:

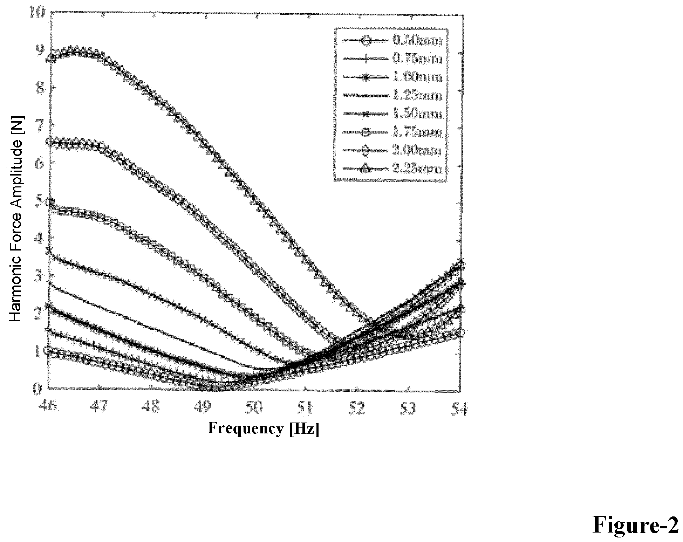

1. RCT is performed by keeping the amplitude of the excitation point constant. The test is repeated for other differential displacement amplitude levels. At each level, the harmonic force spectra of the excitation point are measured (See, Figure 2).

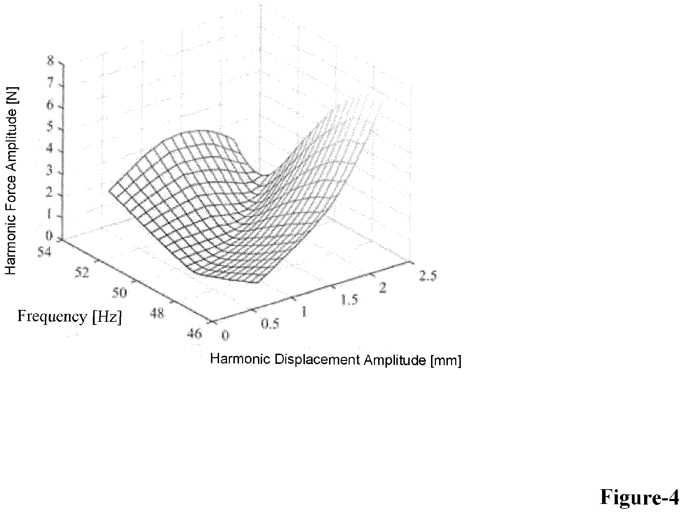

2. HFS is formed by combining the measured harmonic force spectra (See Figure 4).

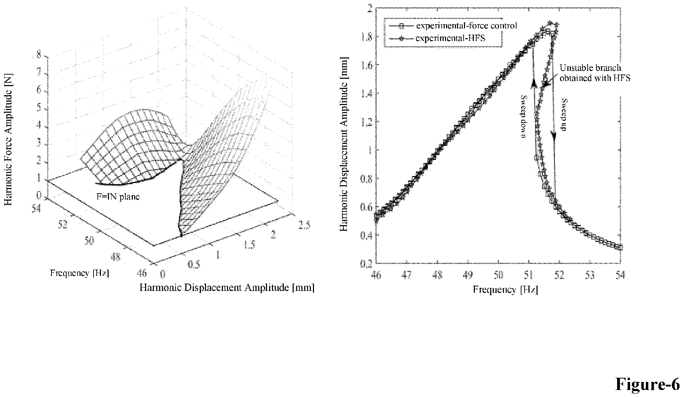

3. When the HFS is cut by a constant force plane, the frequency response curve of the system at that force level - together with unstable points, if any - is determined (See Figure 6).

The present invention is capable of identifying nonlinear systems as well as linear systems that are simpler and that can be readily identified by many commercial software/hardware.

2.7. Verification of the Invention

The invention has been verified with both numerical and experimental case studies. Numerical verification was performed on a 5 degree of freedom mass-spring system with cubic stiffness elements between different degrees of freedom. Experimental validation was carried out on a cantilever beam supported at its free end by thin metal strips that create strong cubic stiffness effect and a real missile structure that exhibits considerable damping nonlinearity due to bolted joints.

The most important feature of the invention is that commercial modal test hardware and software designed for linear systems gain the capability of identifying nonlinear systems (with modal identification, mathematical model acquisition) with RCT and HFS approaches.

Almost all of the modal test equipment widely used in the industry can be provided with the ability to identify nonlinear systems through a practical software that will apply the experimental methodology proposed in the invention. In this context, the invention is considered to have significant commercial yield potential. The property to be protected by the invention is the ability to identify nonlinear systems that the invention will provide to commercial modal test equipment.

**Experiments:**

T-beam

T-beam test setup used to verify the invention is shown in Figure-9. The test setup consists of a cantilever beam (202) whose free end is placed between two geometrically non-linear metal strips (201). In this experimental study, the first elastic mode of the structure exhibiting highly cubic stiffness nonlinearity was investigated.

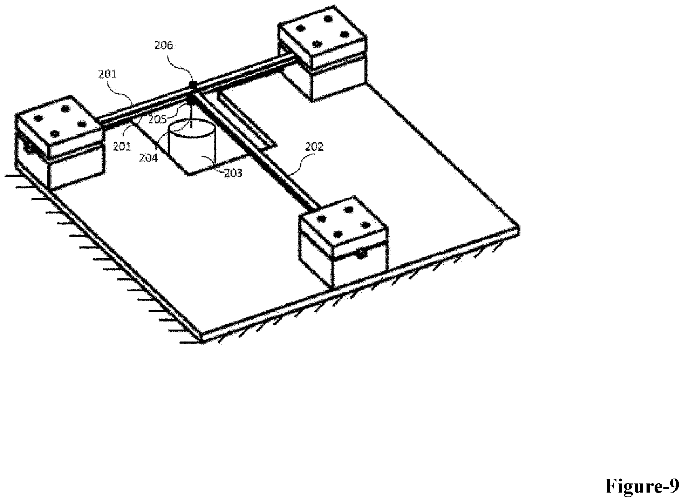

During the experiments, as seen in Figure 9, the structure was excited by a single shaker (203) from the point where the cantilever beam and metal strips intersect. The excitation force was measured by means of a dynamic force transducer (205) placed between the stringer (204) and the structure. The vibration response of the structure was measured with an accelerometer (206) placed at the intersection point. The lower and upper frequency limits used in the stepped-sine test were determined by preliminary broadband random testing. During the stepped-sine testing, the frequency step was taken to be 0.125 Hz.

The accelerometer (206) placed on the structure was used as the control sensor in the stepped-sine tests. Stepped-sine tests were carried out in the form of closed loop control by defining a reference acceleration amplitude profile to the controller-in a way that the displacement amplitude of the structure remains constant.

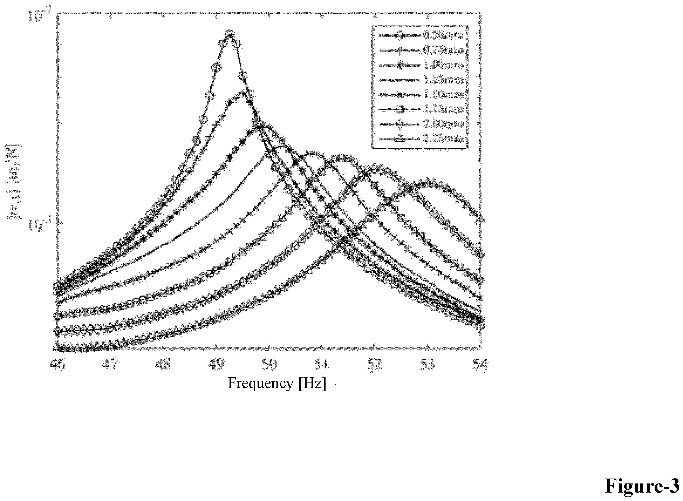

The harmonic force spectra measured from the dynamic force transducer at 8 different constant displacement amplitude levels during the stepped-sine tests are shown in Figure 2. Again, constant-response FRFs measured during stepped-sine tests are shared in Figure 3.

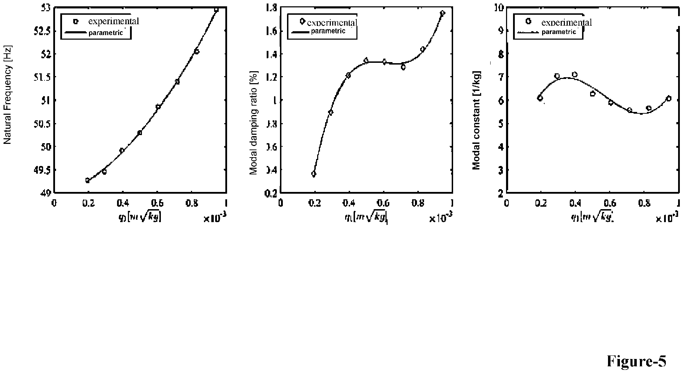

The harmonic force surface (HFS) in Figure 4 has been constructed by combining the harmonic force spectra (in Figure 2) measured at different constant displacement amplitude levels by linear interpolation. In addition, by applying linear modal analysis methods to the constant-response FRFs shown in Figure 3, the modal constant, natural frequency and modal damping ratio were determined as functions of the modal amplitude as seen in Figure 5.

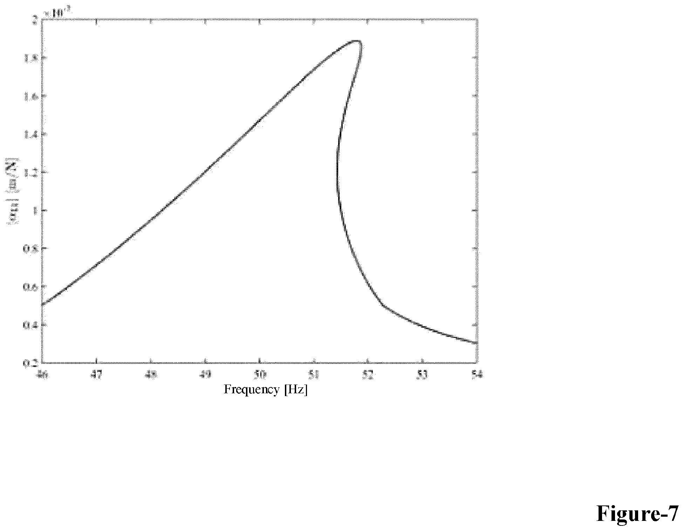

The harmonic force surface formed in Figure 4 was cut with the constant force plane at 1 N level as seen in Figure 6, and the frequency response curve of the structure at 1 N level was determined together with the unstable response curve. Also in Figure 6, the frequency response curve obtained with the HFS approach was compared with the frequency response curve obtained with the conventional force control approach. As seen in Figure 6, the unstable region in the frequency response curve cannot be detected in the conventional force approach. In order to detect stable regions in the force control approach, a sine sweep test should be performed in two opposite directions, i.e. sweep up and sweep down. The most important feature of the invention is that the resonance (peak) point and unstable regions of the frequency response curve are precisely and accurately determined with the HFS approach. Another important point that should be emphasized here is that the invention uses commercial data acquisition software and hardware to perform all of these. As in the methods in reference [16] and [20] in the prior art, control algorithms that have not yet been commercialized are not required. As an alternative to the HFS approach, the modal parameters of the system determined in Figure 5 were used in equation (25), and the frequency response of the structure at 1N force level was synthesized using Newton method and arc-length continuity algorithm. The synthesized frequency response curve was shown in Figure 7.

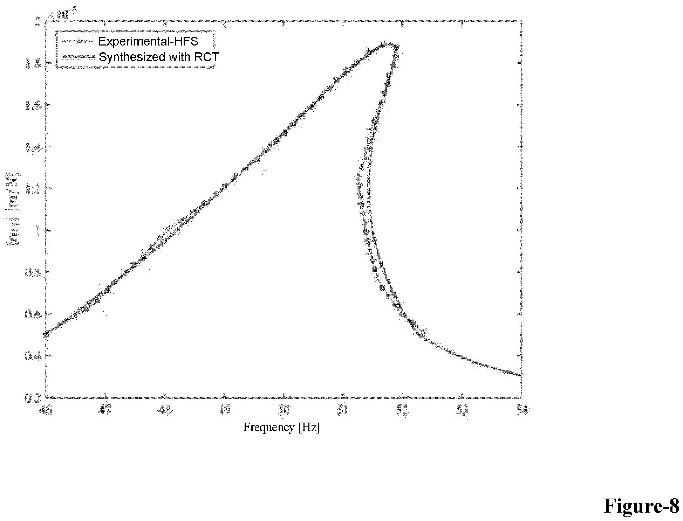

Finally, the frequency response curve determined experimentally with the HFS approach was compared with the frequency response curve synthesized at the same force level using the experimentally determined modal parameters in Figure 8. As seen in Figure 8, the frequency response curves detected by both approaches overlap almost perfectly. As can be seen, the invention has a self-verification feature.

A Real Missile Structure

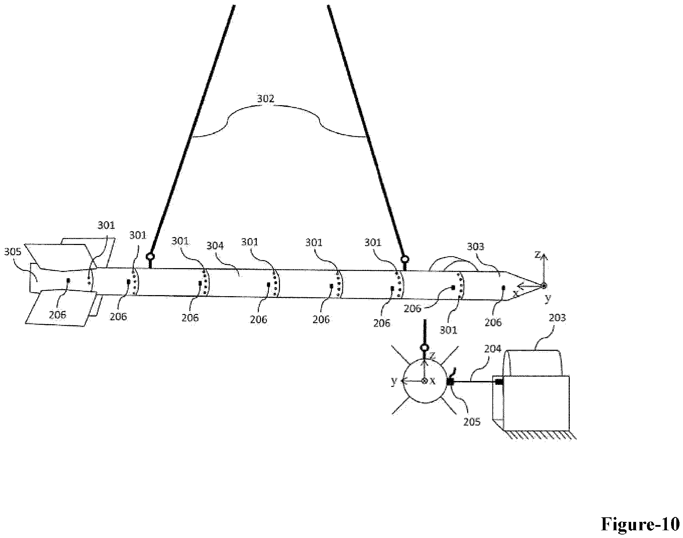

The second test setup used to verify the invention consists of a real missile system as shown in Figure 10. Due to the large number of bolted connections (301) distributed at different points on the missile system, it exhibits a significantly nonlinear dynamic behavior. Modal tests were carried out in free-free boundary condition with the aid of flexible rope (302). By adjusting the length of the flexible rope, the rigid body modal frequencies of the missile were kept sufficiently far from the first elastic mode of the missile. A total of 8 accelerometers (206) were placed on the structure along its axis. Since this study deals with the first elastic mode of the structure, the missile was excited by a single shaker (203) from its nose in the y-axis. The excitation force spectrum was measured by means of a dynamic force transducer (205) placed between the stringer (204) and the structure.

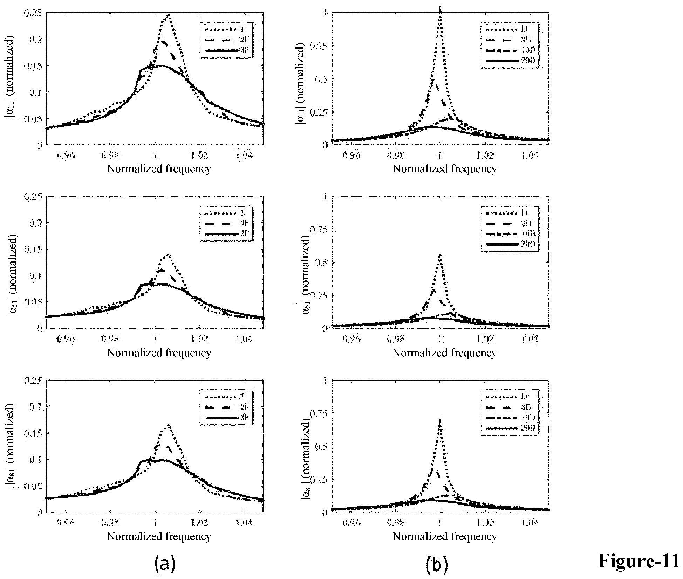

The missile was first subjected to the conventional force-controlled stepped-sine test and constant-force FRFs of the structure were measured at 3 different force levels. Constant force FRFs measured from the accelerometers placed on the nose (303), center (304) and tail (305) sections of the missile, respectively, are given in the left column of Figure 11 as an example. When standard linear modal analysis methods are applied to these FRFs, successful results could not be obtained, as expected, since the system is not linear. It has been determined that the constant force FRFs synthesized using the determined modal parameters do not match well with the constant force FRFs measured from the experiment.

The response-controlled stepped-sine test proposed in the present invention was applied to this system, which could not be identified with the conventional force-controlled stepped-sine testing. Response-controlled stepped-sine tests were performed at 14 different constant displacement amplitude levels. The constant response FRFs measured from accelerometers placed on the nose (303), center (304) and tail (305) of the missile, respectively, were shown in the right column of Figure 11 as an example (FRFs corresponding to only 4 different constant displacement amplitude levels were given for the sake of clarity).

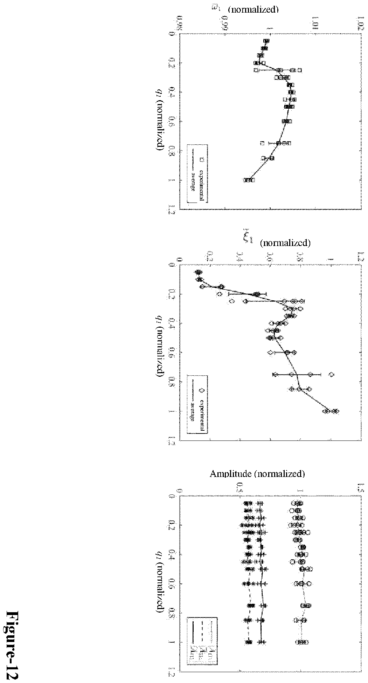

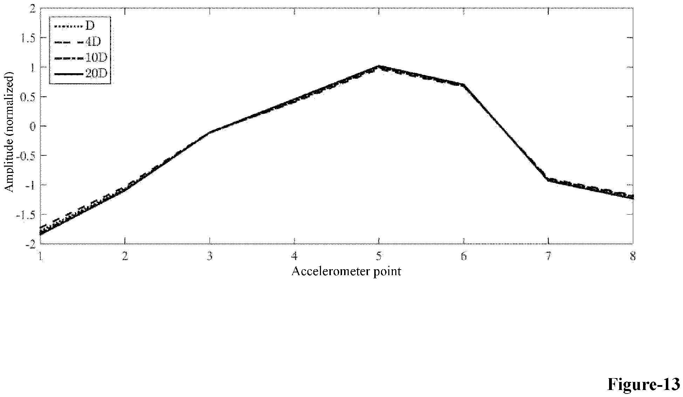

By applying linear modal analysis methods to constant-response FRFs measured with the response control test approach at different constant displacement (equivalently modal amplitude) levels, the modal constant, natural frequency and modal damping ratio, have been detected as functions of modal amplitude with their confidence intervals as shown in Figure 12. The confidence intervals were obtained by repeating the tests several times. By replacing the modal constants corresponding to 8 accelerometer points into equation (24), the nonlinear normal mode corresponding to each constant displacement level of the missile has been determined as seen in Figure 13.

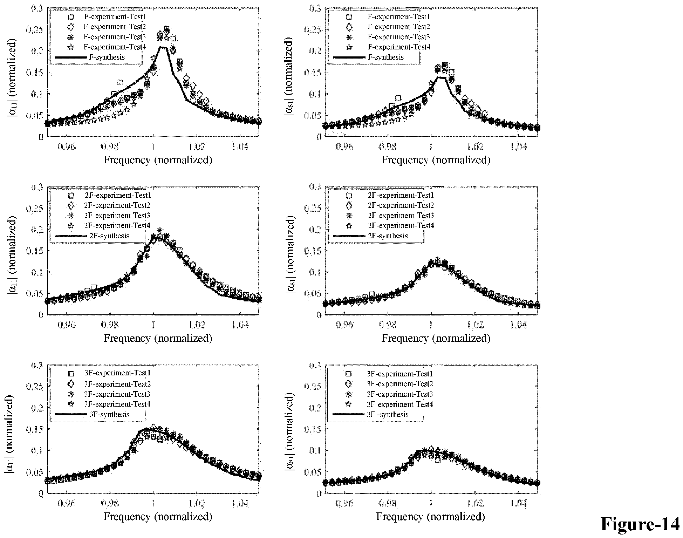

Finally, by using the modal parameters determined in Figure 12 in equation (25), the frequency responses of the structure at 3 different constant force levels were synthesized using the Newton method. The synthesized constant force FRFs were compared with the constant force FRFs measured directly from the force controlled stepped-sine test in Figure 14. The left column of Figure 14 shows the constant-force FRFs (at 3 different force levels from top to bottom) corresponding to the accelerometer at the nose (303) of the missile. The right column of Figure 14 shows the constant-force FRFs (at 3 different force levels from top to bottom) corresponding to the accelerometer at the tail (305) of the missile. The very good overlap of the synthesized FRFs with the directly measured FRFs shows that the present invention determines the modal parameters very accurately and the developed method gives very good results.

In brief, the experimental modal analysis method (100) for engineering systems developed with the invention includes the following process steps:

- Performing a sine test within a certain frequency range so that the response amplitude of any measurement point on the system remains constant and repeating this test for different constant response amplitude levels (101),
- Measuring the harmonic vibration force spectra corresponding to different constant response amplitude levels during sine tests (102),
- Measuring the frequency response functions corresponding to different constant response amplitude levels during sine tests (103),
- Creating the harmonic force surface for each measurement point by combining harmonic force spectra corresponding to different constant response amplitude levels (104),
- Determining the system's modal constant, natural frequency and modal damping ratio as a function of the response amplitude by applying modal analysis to the frequency response functions measured at each constant response amplitude level (105),
- Determining the frequency response functions of the system at that force level by cutting the constructed harmonic force surfaces with a constant force plane (106),
- Synthesizing frequency response functions corresponding to a constant force level of the structure using parameters of modal constant, natural frequency and modal damping ratio determined as a function of the response amplitude (108),
- Verifying the modal parameters determined by comparing the frequency response functions synthesized at the constant force level using the modal constant, natural frequency and modal damping coefficient determined as a function of the response amplitude with the frequency response functions obtained by cutting the harmonic force surface with the same constant force plane (109),

In the case of there are more than one measurement point, the normal mode of the system as a function of the response amplitude is determined by combining the modal constants corresponding to the measurement points at each response amplitude level to form a vector (107).

**REFERECENCES**

[1] G. Kerschen, K. Worden, A.F. Vakakis, J.C. Golinval, Past, present and future of nonlinear system identification in structural dynamics, Mechanical Systems and Signal Processing 20 (2006) 505-592.

[2] J.P. Noël, G. Kerschen, Nonlinear system identification in structural dynamics: 10 more years of progress, Mechanical Systems and Signal Processing 83 (2017) 2-35.

[3] R.M. Rosenberg, The normal modes of nonlinear n-degree-of-freedom systems, Journal of Applied Mechanics 29 (1962) 7-14.

[4] R.M. Rosenberg, On nonlinear vibrations of systems with many degrees of freedom, Advances in Applied Mechanics 9 (1966) 155-242.

[5] W. Szemplinska-Stupnicka, The modified single mode method in the investigation of the resonant vibration of nonlinear systems, Journal of Sound and Vibration 63(4) (1979) 475-489.

[6] S. Setio, H. D. Setio and L. Jezequel, A method of nonlinear modal identification from frequency response tests, Journal of Sound and Vibration 158(3) (1992) 497-515.

[7] C. Gibert, Fitting measured frequency responses using nonlinear modes, Mechanical Systems and Signal Processing 17(1) (2003) 211-218.

[8] F. Thouverez, Presentation of the ECL benchmark, Mechanical Systems Signal Processing 17(1) (2003) 195-202.

[9] D. Göge, U. Füllekrug, M. Sinapius, M. Link, L. Gaul, Advanced test strategy for identification and characterization of nonlinearities of aerospace structures, AIAA Journal 43(5) (2005) 974-986.

[10] S.F. Masri, T.K. Caughey, A nonparametric identification technique for nonlinear dynamic problems, Journal of Applied Mechanics 46 (1979) 433-447.

[11] Flatten, M. F., Wright, J. R., Dimitriadis, G., and Cooper, J. E., Identification of multi-degree of freedom nonlinear systems using an extended modal space model, Mechanical Systems and Signal Processing 23(1) (2009) 8-29.

[12] M.F. Flatten, J.R. Wright, J.E. Cooper, G. Dimitriadis, Identification of a nonlinear wing structure using an extended modal model, AIAA Journal of Aircraft 46(5) (2009) 1614-1626.

[13] U. Fuellekrug, D. Goege, Identification of weak nonlinearities within complex aerospace structures, Aerosp. Sci. Technol. 23 (2012) 53-62.

[14] M. Peeters, G. Kerschen, J.C. Golinval, Dynamic testing of nonlinear vibrating structures using nonlinear normal modes, Journal of Sound Vibration 330 (2011) 486-509.

[15] M. Peeters, G.Kerschen, J.C.Golinval, Modal testing of nonlinear vibrating structures based on nonlinear normal modes: experimental demonstration, Mechanical Systems and Signal Processing 25(2011) 1227-1247.

[16] S. Peter, R.I. Leine, Excitation power quantities in phase resonance testing of nonlinear systems with phase-locked-loop excitation, Mechanical Systems and Signal Processing 96 (2017) 139-158.

[17] V. Denis, M. Jossic, C. Giraud-Audine, B. Chomette, A. Renault, O. Thomas, Identification of nonlinear modes using phase-locked-loop experimental continuation and normal form, Mechanical Systems and Signal Processing 106 (2018) 430-452.

[18] S. Peter, M. Scheel, M. Krack, R.I. Leine, Synthesis of nonlinear frequency responses with experimentally extracted nonlinear modes, Mechanical Systems and Signal Processing 101 (2018) 498-515.

[19] M. Scheel, S. Peter, R.I. Leine, M. Krack, A phase resonance approach for modal testing of structures with nonlinear dissipation, Journal of Sound Vibration 435 (2018) 56-73.

[20] L. Renson, A. Gonzalez-Buelga, D.A.W. Barton, S.A. Neild, Robust identification of backbone curves using control-based continuation, Journal of Sound Vibration 367 (2016) 145-158.

[21] Ö. Tannkulu, B. Kuran, H.N. Özgüven, M. İmregün, Forced harmonic response analysis of nonlinear structures using describing functions, AIAA Journal 31(7) (1993) 1313-1320.

[22] Ö. Arslan, H.N. Özgüven, Modal identification of nonlinear structures and the use of modal model in structural dynamic analysis, in: Proceedings of the 26th International Modal Analysis Conference (IMAC), Orlando, USA, 2008.

[23] Link M Et Al, "Non-Linear Experimental Modal Analysis And Application To Satellite Vibration Test Data", Compdyn 2011 III Eccomas Thematic Conference On Computational Methods In Structural Dynamics And Earthquake Engineering, (2011)

[24] ZHANG GENBEI ET AL, "Identification and Verification of Structural Nonlinearities Based on Vibration Tests", ISMA 2012, International Conference on Noise And Vibration Engineering, (2012)

**Claims**

1. An experimental modal analysis method (100) for engineering systems; the method comprises the following steps;

   • Performing a sine test within a certain frequency range so that the response amplitude of any measurement point on the system remains constant and repeating this test for different constant response amplitude levels (101),
   • Measuring the harmonic excitation force spectra corresponding to different constant response amplitude levels during sine tests (102),
   • Measuring the frequency response functions corresponding to different constant response amplitude levels during sine tests (103),
   • Creating the harmonic force surface for each measurement point by combining harmonic force spectra corresponding to different constant response amplitude levels (104),
   • Determining the system's modal constant, natural frequency and modal damping ratio as a function of the response amplitude by applying modal analysis to the frequency response functions measured at each constant response amplitude level (105),
   • Determining the frequency response functions of the system at a force level by cutting the constructed harmonic force surfaces with a constant force plane corresponding to that force level (106),
   • Synthesizing frequency response functions of the system corresponding to a constant force level using parameters of modal constant, natural frequency and modal damping ratio determined as a function of the response amplitude (108),
   • Verifying the modal parameters determined by comparing the frequency response functions synthesized at a selected constant force level using the modal constant, natural frequency and modal damping ratio determined as a function of the response amplitude with the frequency response functions obtained by cutting the harmonic force surface with the constant force plane corresponding to the same force level(109).

2. The experimental modal analysis method (100), according to claim 1; **characterized by** further determining , in the case of more than one measurement points, the normal mode of the system as a function of the response amplitude by combining the modal constants corresponding to the measurement points at each response amplitude level to form a vector (107) by equations of

$$\{\overline{A}(q_r)\}_r = \{\overline{\phi}_{1r}(q_r)\overline{\phi}_{1r}(q_r) \quad \overline{\phi}_{1r}(q_r)\overline{\phi}_{2r}(q_r) \quad \cdots \quad \overline{\phi}_{1r}(q_r)\overline{\phi}_{mr}(q_r)\}^T$$

and

$$\overline{\phi}_{1r}(q_r) = \sqrt{\overline{A}_{11r}(q_r)}$$

; and then determining

$$\{\overline{\phi}(q_r)\}_r = \frac{1}{\sqrt{\overline{A}_{11r}(q_r)}}\{\overline{A}(q_r)\}_r$$

wherein,

$m$ refers to the total number of measurement points,

$q_r$ is the modal amplitude corresponding to the rth mode, $\{\overline{A}(q_r)\}_r$ is the vector of measured modal constants, $\overline{\phi}_{1r}(q_r)$ is the common multiplier of all the elements of the vector of measured modal constants, $\overline{A}_{11r}(q_r)$ is the measured modal constant of the excitation point and $\{\overline{\phi}(q_r)\}_r$ is the mass normalized normal mode of the system as a function of the response amplitude.

**Patentansprüche**

1. Ein experimentelles Modalanalyseverfahren (100) für technische Systeme; das Verfahren umfasst die folgenden Schritte;

   • zum Durchführen eines Sinustests innerhalb eines bestimmten Frequenzbereichs, so dass die Antwortamplitude an jedem Messpunkt des Systems konstant bleibt, und Wiederholen dieses Tests für verschiedene konstante Antwortamplitudenebene (101),
   • zum Messen der harmonischen Anregungskraftspektren, die verschiedenen konstanten Antwortamplitudenebene entsprechen, bei Sinustests (102),
   • zum Messen der Frequenzgangfunktionen, die verschiedenen konstanten Antwortamplitudenebene entsprechen, bei Sinustests (103),
   • zum Erstellen der harmonischen Oberflächenkraft für jeden Messpunkt durch Kombination harmonischer Kraftspektren, die verschiedenen konstanten Antwortamplitudenebene (104) entsprechen,
   • zum Bestimmen der modalen Konstante, der Eigenfrequenz und des modalen Dämpfungsverhältnisses des Systems als Funktion der Antwortamplitude durch Anwenden einer Modalanalyse auf die bei jedem konstanten Antwortamplitudenebene (105) gemessenen Frequenzantwortfunktionen,
   • zum Bestimmen der Frequenzantwortfunktionen des Systems bei einem Kraftebene durch Schneiden der konstruierten harmonischen Oberflächenkraft mit einer konstanten Kraftebene, die diesem Kraftebene (106) entspricht,
   • zum Synthetisieren von Frequenzantwortfunktionen des Systems, die einem konstanten Kraftebene entsprechen, unter Verwendung von Parametern der modalen Konstante, der Eigenfrequenz und des modalen Dämpfungsverhältnisses, die als Funktion der Antwortamplitude (108) bestimmt werden,
   • zum Überprüfen der Modalparameter, die durch Vergleichen der Frequenzantwortfunktionen, die bei einem ausgewählten konstanten Kraftebene unter Verwendung der Modalkonstante, der Eigenfrequenz und des modalen Dämpfungsverhältnisses, das als Funktion der Antwortamplitude bestimmt wurde, synthetisiert wurden, mit den Frequenzantwortfunktionen, die durch Schneiden der harmonischen Oberflächenkraft mit der konstanten Kraftebene erhalten wurden und dem gleichen Kraftebene (109) entsprechen.

2. Das experimentelle Modalanalyseverfahren (100) nach Anspruch 1, **dadurch gekennzeichnet, dass** ferner bei zum Bestimmen weiteres des Normalmodus des Systems als Funktion der Antwortamplitude im Fall von mehr als einem Messpunkt durch Kombinieren der Modalkonstanten, die den Messpunkten auf jedem Antwortamplitudenebene entsprechen, um einen Vektor (107) durch Gleichungen von zu bilden

$$\{\overline{A}(q_r)\}_r = \{\overline{\phi}_{1r}(q_r)\overline{\phi}_{1r}(q_r) \quad \overline{\phi}_{1r}(q_r)\overline{\phi}_{2r}(q_r) \quad \cdots \quad \overline{\phi}_{1r}(q_r)\overline{\phi}_{mr}(q_r)\}^T$$

Und

$$\overline{\phi}_{1r}(q_r) = \sqrt{\overline{A}_{11r}(q_r)}_,$$

und dann zu bestimmen

$$\{\overline{\phi}(q_r)\}_r = \frac{1}{\sqrt{\overline{A}_{11r}(q_r)}}\{\overline{A}(q_r)\}_r$$

Wobei,

m bezeichnet die Gesamtzahl der Messpunkte,

$q_r$ ist die Modalamplitude, die dem rth Modus entspricht, $\{\overline{A(q_r)}\}_r$ ist der Vektor der gemessenen Modalkonstanten, $\overline{\phi}_{1r}(q_r)$ ist der gemeinsame Multiplikator aller Elemente des Vektors der gemessenen Modalkonstanten, $\overline{A}_{11r}(q_r)$ ist die gemessene Modalkonstante des Anregungspunktes und $\{\overline{\phi}(q_r)\}_r$ ist der massennormalisierte Normalmodus des Systems als Funktion der Antwortamplitude.

## Revendications

1. Méthode expérimentale d'analyse modale (100) pour les systèmes d'ingénierie ; la méthode comprend les étapes suivantes ;

    • Réaliser un test sinusoïdal dans une certaine gamme de fréquences de manière à ce que l'amplitude de réponse de quelconque point de mesure du système reste constante et répéter ce test pour différents niveaux d'amplitude de réponse constante (101),
    • Mesurer les spectres de force d'excitation harmonique correspondant à différents niveaux d'amplitude de réponse constante pendant les tests sinusoïdaux (102),
    • Mesurer les fonctions de réponse de fréquence correspondant à différents niveaux d'amplitude de réponse constante pendant les tests sinusoïdaux (103),
    • Créer la surface de force harmonique pour chaque point de mesure en combinant les spectres de force harmonique correspondant à différents niveaux d'amplitude de réponse constante (104),
    • Déterminer la constante modale, la fréquence naturelle et le rapport d'amortissement modal du système en fonction de l'amplitude de réponse en appliquant l'analyse modale aux fonctions de réponse de fréquence mesurées à chaque niveau d'amplitude de réponse constante (105),
    • Déterminer les fonctions de réponse de fréquence du système à un niveau de force en coupant les surfaces de force harmoniques construites avec un plan de force constant correspondant à ce niveau de force (106),
    • Synthétiser les fonctions de réponse de fréquence du système correspondant à un niveau de force constant en utilisant les paramètres de la constante modale, la fréquence naturelle et le rapport d'amortissement modal déterminés en fonction de l'amplitude de réponse (108),
    • Vérifier les paramètres modaux déterminés en comparant les fonctions de réponse de fréquence synthétisées à un niveau de force constant sélectionné en utilisant la constante modale, la fréquence naturelle et le rapport d'amortissement modal déterminés en fonction de l'amplitude de la réponse avec les fonctions de réponse de fréquence obtenues en coupant la surface de force harmonique avec le plan de force constant correspondant au même niveau de force (109).

2. Méthode expérimentale d'analyse modale (100) selon la revendication 1 ; **caractérisée par** la déterminer en outre, dans le cas de plusieurs points de mesure, le mode normal du système en fonction de l'amplitude de réponse en combinant les constantes modales correspondant aux points de mesure à chaque niveau d'amplitude de réponse pour former un vecteur (107) par des équations de

$$\{\overline{A}(q_r)\}_r = \{\overline{\phi}_{1r}(q_r)\overline{\phi}_{1r}(q_r) \quad \overline{\phi}_{1r}(q_r)\overline{\phi}_{2r}(q_r) \quad \cdots \quad \overline{\phi}_{1r}(q_r)\overline{\phi}_{mr}(q_r)\}^T$$

et

$$\overline{\phi}_{1r}(q_r) = \sqrt{\overline{A}_{11r}(q_r)}$$ ;

et de déterminer ensuite,

$$\{\bar{\phi}(q_r)\}_r = \frac{1}{\sqrt{\bar{A}_{11r}(q_r)}} \{\bar{A}(q_r)\}_r$$

dans laquelle,

m désigne le nombre total de points de mesure,

$q_r$ est l'amplitude modale correspondant au rème mode, $\{\bar{A}(q_r)\}_r$ est le vecteur des constantes modales mesurées, $\bar{\phi}_{1r}(q_r)$ est le multiplicateur commun de tous les éléments du vecteur des constantes modales mesurées, $\bar{A}_{11r}(q_r)$ est la constante modale mesurée du point d'excitation et $\{\bar{\phi}(q_r)\}_r$ est le mode normal à masse normalisée du système en fonction de l'amplitude de la réponse.

101 Response Controlled Sine Testing (RCT)

100

Shaker — Nonlinear Structure

I. Measurement

102 Measurement of harmonic force spectra

103 Measurement of constant-response FRFs

II. HFS & Identification

104 Construction of the Harmonic Force Surface (HFS)

105 Identification of modal parameters

III. Experimental extraction & Synthesis

106 Experimental extraction of constant-force FRFs

108 Synthesis of constant-force FRFs

107 Identification of the normal mode of the system in case of multiple measurements.

109 Self verification

IV. Verification

**Figure-1**

**Figure-2**

**Figure-3**

21

Figure-4

**Figure-5**

**Figure-6**

**Figure-7**

**Figure-8**

**Figure-9**

**Figure-10**

(a)                                   (b)                    **Figure-11**

**Figure-12**

**Figure-13**

Figure-14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. KERSCHEN ; K. WORDEN ; A.F. VAKAKIS ; J.C. GOLINVAL.** Past, present and future of nonlinear system identification in structural dynamics. *Mechanical Systems and Signal Processing,* 2006, vol. 20, 505-592
- **J.P. NOËL ; G. KERSCHEN.** Nonlinear system identification in structural dynamics: 10 more years of progress. *Mechanical Systems and Signal Processing,* 2017, vol. 83, 2-35
- **R.M. ROSENBERG.** The normal modes of nonlinear n-degree-of-freedom systems. *Journal of Applied Mechanics,* 1962, vol. 29, 7-14
- **R.M. ROSENBERG.** On nonlinear vibrations of systems with many degrees of freedom. *Advances in Applied Mechanics,* 1966, vol. 9, 155-242
- **W. SZEMPLINSKA-STUPNICKA.** The modified single mode method in the investigation of the resonant vibration of nonlinear systems. *Journal of Sound and Vibration,* 1979, vol. 63 (4), 475-489
- **S. SETIO ; H. D. SETIO ; L. JEZEQUEL.** A method of nonlinear modal identification from frequency response tests. *Journal of Sound and Vibration,* 1992, vol. 158 (3), 497-515
- **C. GIBERT.** Fitting measured frequency responses using nonlinear modes. *Mechanical Systems and Signal Processing,* 2003, vol. 17 (1), 211-218
- **F. THOUVEREZ.** Presentation of the ECL benchmark. *Mechanical Systems Signal Processing,* 2003, vol. 17 (1), 195-202
- **D. GÖGE ; U. FÜLLEKRUG ; M. SINAPIUS ; M. LINK ; L. GAUL.** Advanced test strategy for identification and characterization of nonlinearities of aerospace structures. *AIAA Journal,* 2005, vol. 43 (5), 974-986
- **S.F. MASRI ; T.K. CAUGHEY.** A nonparametric identification technique for nonlinear dynamic problems. *Journal of Applied Mechanics,* 1979, vol. 46, 433-447
- **FLATTEN, M. F. ; WRIGHT, J. R. ; DIMITRIADIS, G. ; COOPER, J. E.** Identification of multi-degree of freedom nonlinear systems using an extended modal space model. *Mechanical Systems and Signal Processing,* 2009, vol. 23 (1), 8-29
- **M.F. FLATTEN ; J.R. WRIGHT ; J.E. COOPER ; G. DIMITRIADIS.** Identification of a nonlinear wing structure using an extended modal model. *AIAA Journal of Aircraft,* 2009, vol. 46 (5), 1614-1626

- **U. FUELLEKRUG ; D. GOEGE.** Identification of weak nonlinearities within complex aerospace structures. *Aerosp. Sci. Technol.,* 2012, vol. 23, 53-62
- **M. PEETERS ; G. KERSCHEN ; J.C. GOLINVAL.** Dynamic testing of nonlinear vibrating structures using nonlinear normal modes. *Journal of Sound Vibration,* 2011, vol. 330, 486-509
- **M. PEETERS ; G.KERSCHEN ; J.C.GOLINVAL.** Modal testing of nonlinear vibrating structures based on nonlinear normal modes: experimental demonstration. *Mechanical Systems and Signal Processing,* 2011, vol. 25, 1227-1247
- **S. PETER ; R.I. LEINE.** Excitation power quantities in phase resonance testing of nonlinear systems with phase-locked-loop excitation. *Mechanical Systems and Signal Processing,* 2017, vol. 96, 139-158
- **V. DENIS ; M. JOSSIC ; C. GIRAUD-AUDINE ; B. CHOMETTE ; A. RENAULT ; O. THOMAS.** Identification of nonlinear modes using phase-locked-loop experimental continuation and normal form. *Mechanical Systems and Signal Processing,* 2018, vol. 106, 430-452
- **S. PETER ; M. SCHEEL ; M. KRACK ; R.I. LEINE.** Synthesis of nonlinear frequency responses with experimentally extracted nonlinear modes. *Mechanical Systems and Signal Processing,* 2018, vol. 101, 498-515
- **M. SCHEEL ; S. PETER ; R.I. LEINE ; M. KRACK.** A phase resonance approach for modal testing of structures with nonlinear dissipation. *Journal of Sound Vibration,* 2018, vol. 435, 56-73
- **L. RENSON ; A. GONZALEZ-BUELGA ; D.A.W. BARTON ; S.A. NEILD.** Robust identification of backbone curves using control-based continuation. *Journal of Sound Vibration,* 2016, vol. 367, 145-158
- **Ö. ARSLAN ; H.N. ÖZGÜVEN.** Modal identification of nonlinear structures and the use of modal model in structural dynamic analysis. *Proceedings of the 26th International Modal Analysis Conference (IMAC), Orlando, USA,* 2008
- **LINK M et al.** Non-Linear Experimental Modal Analysis And Application To Satellite Vibration Test Data. *Compdyn 2011 III Eccomas Thematic Conference On Computational Methods In Structural Dynamics And Earthquake Engineering,* 2011

- **ZHANG GENBEI et al.** Identification and Verification of Structural Nonlinearities Based on Vibration Tests. *ISMA 2012, International Conference on Noise And Vibration Engineering,* 2012